# EUROPEAN PATENT SPECIFICATION

(11) **EP 0 931 030 B1**
(45) Date of publication and mention of the grant of the patent: **03.05.2000**
(21) Application number: 97935945.2
(22) Date of filing: 14.08.1997
(51) Int. Cl.: C04B 22/06, C04B 24/22

(54) **A METHOD FOR PREPARATION OF A HARDENING COMPOSITION**
VERFAHREN ZUR HERSTELLUNG EINER ABBINDENDEN ZUSAMMENSETZUNG
PROCEDE DE PREPARATION D'UNE COMPOSITION DURCISSANTE

(30) Priority: 19.09.1996 SE 9603418
(43) Date of publication of application: 28.07.1999
(73) Proprietor: Eka Chemicals AB, 445 80 Bohus (SE)
(72) Inventor: BERGQVIST, Hans, S-423 50 Torslanda (SE); CHANDRA, Satish, S-411 25 Göteborg (SE)
(74) Representative: Jönsson, Christer
(86) International application number: SE9701350
(87) International publication number: WO9812149

(56) References cited:
- GB-A- 1 495 811

## Description

The present invention relates to a method for preparation of concrete or mortar having improved strength and durability properties. It also relates to concrete and mortar obtainable by the method, and to the use of said concrete, particularly as construction concrete, as well as to the use of said mortar.

Concrete is an artificial stone, commonly used as a building material, in which aggregates of suitable sizes are bound together by a matrix of a hydraulic binder. Usually the aggregates are stones, in the broad sense, and the hydraulic binder a cement. Concrete normally contains more aggregates than hydraulic binder, at least when calculated on volume basis. The aggregates commonly have a particle size distribution in the range of about 0.01 - 100 mm. In order to prepare concrete the aggregates and the hydraulic binder are mixed with water. Furthermore, concrete may contain certain additives such as setting and hardening additives, usually called accelerators, or workability additives, usually called superplasticiser. Mortar is distinguished by the maximum size of its aggregates: in general, mortar contains only aggregates with a maximum size of about 2-4 mm, e.g. sand. The concepts of cement, concrete, and mortar are furthermore extensively discussed in Ullman's encyclopedia of industrial chemistry, 5th ed., Vol. A5, pp. 490-538, VCH, Weinheim, Germany 1986, hereby incorporated by reference. Below, mortar is comprised, for brevity's sake, by the concept of "concrete".

One important property of concrete is obviously its strength. An important parameter controlling concrete strength is the water:cement ratio. Other factors are the type of cement, cunng conditions, moisture content, degree of hydration of the cement, and the grading and shape of aggregates. If sufficient water is provided, the hydration of cement will continue over a period of several years, and concrete strength may increase continuously during this time. Conventionally, high strength is achieved by using a low water:cement ratio; superplasticisers are often used in this connection as they permit the use of lower water:cement ratios. Another way of improving the strength is to add silica fume, which is a pozzolanic waste material from silicon and ferrosilicon industries, having particle sizes of about 0.1-0.2 mm. Silica fume contains however unburnt coal, that gives the concrete a dark, usually undesired, colour, as well as other impurities, such as small quantities of metallic silicon that may cause explosion spalling of the concrete if it gets into contact with water.

Wagner and Hauck disclose in Hochsch. Archit. Bauwes. - Weimar 40 (1994) 5/6/7, pp. 183-7 the use of synthetically produced, chemically pure, and completely amorphous silica having an average particle size of 15 nm, which they call "nanosilica", instead of silica fume, which is referred to as "microsilica". The nanosilica particles are indicated to have specific surface areas in the range of 180 - 230 m²/g, suggesting a rather narrow particle size distribution; in this connection it should be said that according to "The Chemistry of Silica", Ralph K. Iler, Wiley & Sons 1979, pp. 346-7, hereby incorporated by reference, the specific surface area of silica may be transformed into the corresponding particle size, and vice versa, using the formula 2720/A_{d} = dₛ, where A_{d} is the specific surface area in m²/g and dₛ is the particle size in nanometers. The impurity problems associated with silica fume are greatly overcome by the use of nanosilica. The concrete strength development is indicated to be about the same as if microsilica were used; the early strength development, i.e. from 1 to 7 days, is inferred by table 2 of the reference to be at most 36%. Agglomeration of the nanosilica is not discussed.

In EP-A2-0,519,155 a silica sol similar to nanosilica is used in shotcrete, primarily to provide the shotcrete with better cohesive properties, which in turn gives a lower degree of dust formation and rebound during the shotcreting. The cohesive effect is accomplished by promoting aggregation of the colloidal silica. The disclosed silica sol, which have particle sizes in the range of 7-40 nm and specific surfaces in the range of 50-700 m²/g, shows a positive impact on the early strength compared to the effect of silica fume. The development of compressive strength from one to seven days is, in absence of accelerators, about 58%. Strength at later age is not mentioned. It has however been found (by the inventors of the present invention) that aggregation, i.e. gelling, coagulation, flocculation, or coarcevation, of the coiloidal silica has a negative influence on the long term strength when compared to concrete in which silica fume is used, especially when higher doses of silica colloid are used, or if not mixed properly with the concrete mixture; this is probably due to encapsulation of the cement particles by the silica, which in turn is a hindrance to further hydration of the cement particles. No suggestion is given in EP-A2-0,519,155 about the particle size distribution.

GB-1 495 811 describes a method for the manufacture of concrete articles upon mixing cement, water and filler material to form a concrete mixture, adding to the mixture a stable suspension of finely divided silica in a liquid containing a lyotropic liquid crystalline phase as a suspension stabilizer and aims at improving its hardening. Said silica is present in an amount from 0,01 to 10% by weight to the amount of the cement used. The silica involved has preferably a particle size of <10 µm, is a type recovered from the gas leaving certain types of metallurgical furnaces for the Fe-Si manufacture and often contains metallic impurities. Alternatively silica of a particle size <0,1 µm, generally in the range of 0.001-1 µm may be used, wherein when its particle size is below 0.01 µm it is suggested to add an amount from 0.01-0.5% to the concrete mixture, based upon the weight of the cement.

The problem to be solved by the present invention is to provide a method for preparing concrete having enhanced early strength while having a good long term strength.

This problem is solved by the method defined by appended claim 1. According to this method, a mixture of an hydraulic binder, aggregates, water, and colloidal silica, is prepared, whereby the relative standard deviation of the particle size distribution of the colloidal silica is at least about 30%, preferably at least about 35%, and in particular at least about 40%. In this context "colloidal silica" means stable dispersions or sols of discrete particles of amorphous silica; this definition is the same as put forward in "The Chemistry of Silica" by Ralph K. Iler, page 312, Wiley & Sons 1979. The relative standard deviation of the particle size distribution is the ratio between the mean particle size by numbers and the standard deviation of the particle size distribution. "Variation coefficient" and "coefficient of variation" are terms synonymous to "relative standard deviation". The reason behind the positive effect of the broad particle size distribution on the strength parameters is not known, although a plausible hypothesis is that the smaller particles have a stabilising influence on the larger ones against aggregation.

The present invention has the additional advantages of providing concrete having good durability, especially against chemical attacks from, for instance, chlorides, sulphates, carbon dioxide, nitrogen oxides, and water. Furthermore, the obtained concrete has a high ultimate strength and good frost resistance. A particular advantage associated with the present invention is that the final concrete products have a most homogeneous and uniform strength.

### The hydraulic binder is preferably a portland cement.

Preferably, the silica particles used in the present method have an average specific surface area below about 200 m²/g, in particular below about 180 m²/g, and preferably in the range of about 50-170 m²/g. Above 200 m²/g it becomes increasingly difficult to counteract aggregation.

It is also preferred that the silica particles used in the present method have a particle size distribution the standard deviation of which is at least about 20 nm. The particle size distribution may be monomodal, i.e. have one particle size with a higher frequency of occurrence than the immediately adjacent sizes, or be polymodal, i.e. have two or more such particle sizes.

The silica particles preferably have a mean particle size by numbers of about 7-50 nm, particularly of about 10-30.

In the present method the particles are preferably added in form of an aqueous suspension containing about 8-60 percent by weight, in particular about 30-50 percent by weight, of silica. The particles are generally of a size of about 5-200 nm, preferably 10-100 nm, and they are preferably added to the mixture in an amount of about 1-8 percent by weight, in particular about 1-5 percent by weight; and especially about 2 percent by weight, calculated on the weight of the hydraulic binder. According to a preferred embodiment of the present invention the method also includes addition of a superplasticiser. Any suitable superplasticiser may be used, but it is preferred that it comprises a sulphonated naphthalene-formaldehyde resin, a sulphonated melamine-formaldehyde resin, or a sulphonated melamine-urea-formaldehyde resin, or a mixture thereof. Exemplary of useful superplasticiser are those disclosed in WO 91/12214 and EP 692,465, both of which are hereby incorporated by reference.

A part or all of the superplasticiser is preferably added to the concrete mixture before the colloidal silica, as this way of adding has shown to have a stabilising effect on the colloidal silica. In a particularly preferred embodiment of the present method about 35-55 percent by weight, preferably about 55 percent by weight, of the superplasticiser, based on the total amount of superplasticiser, is added before the colloidal silica.

The colloidal silica need not be stabilized by any stabilizing agent. It could, for instance, be silica sol prepared by the ion-exchange method as set forth in "The Colloid Chemistry of Silica", Horacio E. Bergna (Ed.), American Chemical Society 1994. Preferably, however, the colloidal silica is stabilized, in particular with alkaline substances, advantageously by ions of alkaline metals, e.g. of Na, K, or Li, or by ammonium ions (NH₄), or a combination thereof. In a preferred embodiment the amount of stabilizing alkaline substance is governed by a molar ratio SiO₂:M₂O of from about 150:1 to about 300:1, whereby M represents Na, K, Li, or NH₄.

Accelerators, such as conventionally used in shotcrete, are preferably not used, or only used in insignificant amounts, when preparing concrete according to the present method.

According to a preferred embodiment of the present invention, concrete is prepared by mixing about 100 parts by weight of hydraulic binder; about 100-1000 parts by weight of aggregates; up to about 5 parts by weight of colloid silica; up to about 5 parts by weight of superplasticiser; and about 25-75 parts by weight of water.

The present invention also relates to concrete obtainable by the method according to the present invention as set forth above. According to one embodiment of the present invention concrete obtainable by said method is preferably used as construction concrete, which concept in the present context does not comprise shotcrete. The concept of "concrete" also comprises special concretes such as heavyweight concrete, lightweight concrete, fibre-reinforced concrete, and massive concrete.

Below, the present invention is illustrated by means of non-limiting examples.

Example 1: An anionic silica sol stabilized with NH₄⁺ and containing less than 0.05% of Na₂O was used. The specific surface area was 80 m²/g, the mean particle diameter by numbers was 35 nm with a standard deviation by numbers of 25 nm, i.e. the relative standard deviation was 71%. 95% by numbers of the particles had a size within the range from 5-150 nm. The silica sol was present as a dispersion containing 40 percent by weight of the solid particles, based on the dispersion. A mixture was prepared of 500g standard portland cement, 1500g standard sand 1,2,3, 7.5g superplasticiser "Mighty 100", which is a sulphonated naphthalene formaldehyde condensate available from the Japanese company Kao Chemicals, and 62.5g of the silica sol dispersion, whereby 50% of the total added amount of superplasticiser was added to the mixture before addition of the silica sol. The water:cement ratio was 0.4. Fresh density was 2195 kg/m³, and 4x4x16 cm mortar prism samples were cast. The samples were cured for one day in steal frames, five days in water, and later in a climate room at 20°C and 55% RH. The flexural and compressive strengths were measured after one, three, and seven days, by means of standard methods SS 13 42 33 and SS - EN 196.1, respectively. The results are set forth in Table I below.

**Table I**

| Days | Flexural strength, MPa | Compressive strength, MPa |
|---|---|---|
| 1 | 5.4 | 30.7 |
| 3 | 8.8 | 40.2 |
| 7 | 6.5 | 50.7 |
| strength development in 1-7 days, % | 20 | 65 |

As can be seen in Table I the development of compressive strength from one to seven days clearly surpasses the development suggested in EP-A2-519,155; in fact even the actual compressive strength is higher.

Example 2 Mortars were made with different amounts of an anionic colloidal silica sol containing 0.22% of Na₂O. The specific surface area of the silica particles was 80 m²/g, the mean particle diameter by numbers was 62 nm with a standard deviation by numbers of 28 nm, i.e. the relative standard deviation was 45%. 95% by numbers of the particles had a size within the range of 62 nm +/- 56 nm. The silica sol was present as a dispersion containing 50 percent by weight of the solid particles. The mortars has cement:sand ratios of 1:3. Standard portland cement, supplied by Cementa AB, Slite, Sweden, and standard sand, grade 1, 2, and 3 were used. Mighty 100 was used as superplasticiser in an amount of 1.5 percent by weight, based on the weight of the cement; about 50% of the plasticiser was added before the colloidal silica sol was added. Table II below shows the weight percentages of silica sol, based on the cement, together with the water:cement ratios, the fresh densities, the air contents, and the consistencies, of the various mortars

**Table II**

| No. | silica sol, % | w/c ratio | fresh density, kg/m³ | air, % | consistency, mm |
|---|---|---|---|---|---|
| KF3 | 3 | 0.41 | 2300 | 3.02 | 135 |
| KF5 | 5 | 0.43 | 2220 | 5.9 | 130 |
| KF8 | 8 | 0.46 | 2260 | 4.70 | 130 |

Prisms having the dimensions 4x4x16 cm were cast of the mortars according to Table II. They were demoulded after 1 day, cured in water for 5 days, and in a climate room at 55% RH and 22°C for 22 days. Flexural and compressive strengths were measured after 1, 7, and 28 days, by means of standard method SS 1342 33 and SS-EN 196-1, respectively. The results, given in MPa, are set forth in Table III below.

**Table III**

| | KF3 | KF5 | KF8 |
|---|---|---|---|
| Compressive strength, 1 day | 31.4 | 33.2 | 22.3 |
| 7 days | 51.7 | 53.0 | 51.5 |
| 28 days | 63.7 | 61.7 | 64.8 |
| Flexural strength 1 day | 5.88 | 6.18 | 4.31 |
| 7 days | 9.32 | 9.41 | 7.26 |
| 28 days | 12.7 | 12.1 | 10.3 |

Regarding early strength, i.e. in 1-7 days, the best results were evidently obtained with mortar KF5.

KF5 was subjected to some durability test. Chloride-ion penetration was measured by means of a method described in an article by Tang et al. entitled "Rapid determination of chloride diffusivity in concrete applying an electric field", Material Journal, Vol. 89, No. 1, page 49, The American Concrete Institute 1992, hereby incorporated be reference, and the diffusion coefficient regarding chloride-ion penetration for KF3 was determined to 3.13x10⁻¹² m²/s, whereas a reference sample with no silica sol added showed a diffusion coefficient of 11.1x10⁻¹² m²/s. The carbonation depth was measured by spraying phenolphthalein on a fresh broken surface, substantially perpendicular to the surface of the sample, and measuring the length of penetration indicated by the phenolphtalein. The KF3 sample showed a penetration depth of 1.49 mm after 225 hours, while a reference sample with no silica sol added showed a penetration depth of 12.2 mm after an equally long period of time. Freeze-thaw salt resistance was determined by freezing a KF3 mortar prism in a saturated NaCI solution at -20°C for 16 hours ant then thawing it in water at ambient temperature for 8 hours. This freeze-thaw sequence was repeated a number of times, whereby each sequence was denominated "a cycle". The freeze-thaw salt resistance was estimated on basis of the weight change of the prisms after certain numbers of cycles. A reference prism with no silica sol added showed a weight loss of 20% after 11 cycles, and after 16 cycles it was broken. The KF3 prism, however, instead showed a weight gain (due to absorption of the salt solution) of about 0.3% at 16 cycles, and even at 35 cycles there was not any noticeable weight loss.

## Claims

1. A method for preparing concrete or mortar, **characterised** in that it comprises preparing a mixture of a hydraulic binder, aggregates, water, and colloidal silica, wherein the relative standard deviation of the particle size distribution by numbers of the colloidal silica is at least about 30%.

2. A method according to any preceding claim, **characterised** in that the silica particles have an average specific surface area below about 200 m²/g.

3. A method according to claim 2, **characterised** in that the particles have an average specific surface area of from about 50 to about 170 m²/g.

4. A method according to any preceding claim, **characterised** in that the silica particles have a particle size distribution with a standard deviation of at least about 20 nm.

5. A method according to any preceding claim, **characterised** in that the silica particles have a mean particle size by numbers of from about 7 to about 50 nm.

6. A method according to any preceding claim, **characterised** in that the particles are added with an aqueous suspension containing from about 15 to about 50 percent by weight of silica.

7. A method according to any preceding claim, **characterised** in that the particles are added in an amount of from about 1 to about 8 percent by weight, calculated on the hydraulic binder.

8. A method according to any preceding claim, **characterised** in that the preparation of the mixture includes addition of a superplasticiser.

9. A method according to claim 8, **characterised** in that part of the superplasticiser is added to the mixture before the silica particles.

10. A method according to claim 9, **characterised** in that said part of plasticiser is from about 35 to about 55 weight-% based on the total amount of superplasticiser added.

11. A method according to any preceding claim, **characterised** in that the superplasticiser comprises a sulphonated naphthalene-formaldehyde resin, a sulphonated melamine-formaldehyde resin, or a sulphonated melamine-urea-formaldehyde resin.

12. A method according to any preceding claim, **characterised** in that the silica particles are stabilized against aggregation by means of alkali metal ions or ammonium ions.

13. A method according to any preceding claim, **characterised** in that no or only an insignificant amount of accelerator is added to the mixture.

14. A method according to any preceding claim, **characterised** in that the concrete or mortar is prepared by mixing about 100 parts by weight of hydraulic binder; from about 100 to about 1000 parts by weight of aggregates; up to about 5 parts by weight of colloid silica; up to about 5 parts by weight of superplasticiser; and from about 25 to about 75 parts by weight of water.

15. Concrete or mortar obtainable by the method according to any preceding claim.

16. Concrete or mortar according to claim 15, with the proviso that it is not shotcrete.

17. Concrete or mortar according to claim 15 or 16, **characterised** in that it is construction concrete.

18. Concrete or mortar according to anyone of claims 15-17, **characterised** in that it is mortar.

## Patentansprüche

1. Verfahren zur Herstellung von Beton oder Mörtel, dadurch gekennzeichnet, dass es Herstellen eines Gemisches aus einem hydraulischen Bindemittel, Zuschlagstoffen, Wasser und kolloidalem Siliciumdioxid umfasst, wobei die relative Standardabweichung der zahlenmäßigen Teilchengrößenverteilung des kolloidalen Siliciumdioxids mindestens etwa 30% beträgt.

2. Verfahren nach einem vorstehenden Anspruch, dadurch gekennzeichnet, dass die Siliciumdioxidteilchen eine mittlere spezifische Oberfläche von weniger als etwa 200 m²/g besitzen.

3. Verfahren nach Anspruch 2, dadurch gekennzeichnet, dass die Teilchen eine mittlere spezifische Oberfläche von etwa 50 bis etwa 170 m²/g besitzen.

4. Verfahren nach einem vorstehenden Anspruch, dadurch gekennzeichnet, dass die Siliciumdioxidteilchen eine Teilchengrößenverteilung mit einer Standardabweichung von mindestens etwa 20 nm besitzen.

5. Verfahren nach einem vorstehenden Anspruch, dadurch gekennzeichnet, dass die Siliciumdioxidpartikel ein Zahlenmittel der Teilchengröße von etwa 7 bis etwa 50 nm besitzen.

6. Verfahren nach einem vorstehenden Anspruch, dadurch gekennzeichnet, dass die Teilchen in Form einer wässerigen Suspension, die etwa 15 bis etwa 50 Gew.-% Siliciumdioxid enthält, hinzugefügt werden.

7. Verfahren nach einem vorstehenden Anspruch, dadurch gekennzeichnet, dass die Teilchen in einer Menge von etwa 1 bis etwa 8 Gew.-%, bezogen auf das hydraulische Bindemittel, hinzugefügt werden.

8. Verfahren nach einem vorstehenden Anspruch, dadurch gekennzeichnet, dass die Herstellung des Gemisches das Hinzufügen eines Superweichmachers einschließt.

9. Verfahren nach Anspruch 8, dadurch gekennzeichnet, das ein Teil des Superweichmachers dem Gemisch vor den Siliciumdioxidteilchen hinzugefügt wird.

10. Verfahren nach Anspruch 9, dadurch gekennzeichnet, dass der Teil des Weichmachers etwa 35 bis etwa 55 Gew.-%, bezogen auf die Gesamtmenge des hinzugefügten Superweichmachers, beträgt.

11. Verfahren nach einem vorstehenden Anspruch, dadurch gekennzeichnet, dass der Superweichmacher ein sulfoniertes Naphthalin-Formaldehyd-Harz, ein sulfoniertes Melamin-Formaldehyd-Harz, oder ein sulfoniertes Melamin-Harnstoff-Formaldehyd-Harz, umfasst.

12. Verfahren nach einem vorstehenden Anspruch, dadurch gekennzeichnet, dass die Siliciumdioxidteilchen mittels Alkalimetallionen oder Ammoniumionen gegen Aggregation stabilisiert werden.

13. Verfahren nach einem vorstehenden Anspruch, dadurch gekennzeichnet, dass dem Gemisch kein oder nur eine unbedeutende Menge Beschleuniger hinzugefügt wird.

14. Verfahren nach einem vorstehenden Anspruch, dadurch gekennzeichnet, dass der Beton oder Mörtel durch Mischen von etwa 100 Gewichtsteilen hydraulischem Bindemittel; etwa 100 bis etwa 1000 Gewichtsteilen Zuschlagstoffen; weniger als etwa 5 Gewichtsteilen kolloidalem Siliciumdioxid; weniger als etwa 5 Gewichtsteilen Superweichmacher; und etwa 25 bis etwa 75 Gewichtsteilen Wasser, hergestellt wird.

15. Beton oder Mörtel, erhältlich durch das Verfahren eines vorstehenden Anspruchs.

16. Beton oder Mörtel nach Anspruch 15, mit der Maßgabe, dass es sich nicht um Spritzbeton handelt.

17. Beton oder Mörtel nach Anspruch 15 oder 16, dadurch gekennzeichnet, dass es sich um Baubeton handelt.

18. Beton oder Mörtel nach einem der Ansprüche 15-17, dadurch gekennzeichnet, dass es sich um Mörtel handelt.

## Revendications

1. Procédé de préparation de béton ou de mortier, caractérisé en ce qu'il comprend la préparation d'un mélange d'un liant hydraulique, d'agrégats, d'eau et de silice colloïdale, l'écart type relatif de la distribution granulométrique en nombre de la silice colloïdale étant d'au moins environ 30 %.

2. Procédé selon la revendication 1, caractérisé en ce que les particules de silice ont une surface spécifique moyenne inférieure à environ 200 m²/g.

3. Procédé selon la revendication 2, caractérisé en ce que les particules ont une surface spécifique moyenne d'environ 50 à environ 170 m²/g.

4. Procédé selon l'une quelconque des revendications précédentes, caractérisé en ce que les particules de silice ont une distribution granulométrique présentant un écart type d'au moins environ 20 nanomètres.

5. Procédé selon l'une quelconque des revendications précédentes, caractérisé en ce que les particules de silice ont une taille moyenne de particule en nombre d'environ 7 à environ 50 nanomètres.

6. Procédé selon l'une quelconque des revendications précédentes, caractérisé en ce que les particules sont ajoutées sous la forme d'une suspension aqueuse contenant d'environ 15 à environ 50 % en poids de silice.

7. Procédé selon l'une quelconque des revendications précédentes, caractérisé en ce que les particules sont ajoutées en une proportion d'environ 1 à environ 8 % en poids par rapport au liant hydraulique.

8. Procédé selon l'une quelconque des revendications précédentes, caractérisé en ce que la préparation du mélange comprend l'addition d'un superplastifiant.

9. Procédé selon la revendication 8, caractérisé en ce que une partie du superplastifiant est ajoutée au mélange avant les particules de silice.

10. Procédé selon la revendication 9, caractérisé en ce que ladite partie du superplastifiant représente d'environ 35 à environ 55 % en poids de la quantité totale de superplastifiant ajouté.

11. Procédé selon l'une quelconque des revendications précédentes, caractérisé en ce que le superplastifiant comprend une résine de formaldéhyde et de naphtalène sulfoné, une résine de formaldéhyde et de mélamine sulfonée ou une résine de formaldéhyde, d'urée et de mélamine sulfonée.

12. Procédé selon l'une quelconque des revendications précédentes, caractérisé en ce que les particules de silice sont stabilisées vis-à-vis de l'agrégation au moyen d'ions de métal alcalin ou d'ions ammonium.

13. Procédé selon l'une quelconque des revendications précédentes, caractérisé en ce que l'on n'ajoute pas au mélange d'accélérateur ou on en ajoute seulement une quantité négligeable.

14. Procédé selon l'une quelconque des revendications précédentes, caractérisé en ce que l'on prépare le béton ou le mortier en mélangeant environ 100 parties en poids de liant hydraulique, d'environ 100 à environ 1000 parties en poids d'agrégats, jusqu'à environ 5 parties en poids de silice colloïdale, jusqu'à environ 5 parties en poids de superplastifiant, et d'environ 25 à environ 75 parties en poids d'eau.

15. Béton ou mortier que l'on peut obtenir par le procédé selon l'une quelconque des revendications précédentes.

16. Béton ou mortier selon la revendication 15, à condition que ce ne soit pas du béton projeté.

17. Béton ou mortier selon la revendication 15 ou 16, caractérisé en ce qu'il s'agit d'un béton de construction.

18. Béton ou mortier selon l'une quelconque des revendications 15 à 17, caractérisé en ce qu'il s'agit d'un mortier.
